# EUROPEAN PATENT SPECIFICATION

(11) **EP 3 935 374 B1**
(45) Date of publication and mention of the grant of the patent: **11.09.2024**
(21) Application number: 20714483.3
(22) Date of filing: 03.03.2020
(51) Int. Cl.: G01N 27/04

(54) **DEVICE AND METHOD FOR DETERMINING THE SALT CONCENTRATION ON A ROAD SURFACE AND SERVICE VEHICLE ON WHICH THIS DEVICE IS MOUNTED**
VORRICHTUNG UND VERFAHREN ZUR BESTIMMUNG DES SALZGEHALTES AUF EINER FAHRBAHNOBERFLÄCHE UND DIENSTWAGEN MIT MONTIERTER VORRICHTUNG
APPAREIL ET PROCEDE DE MESURE DE LA CONCENTRATION DE SEL SUR LA SURFACE D'UNE ROUTE ET VOITURE DE SERVICE AVEC CET APPAREIL

(30) Priority: 05.03.2019 IT 201900003189
(43) Date of publication of application: 12.01.2022
(73) Proprietor: ALL.V.IN. S.r.l. - Allestimenti Veicoli Industriali, 25122 Brescia (IT)
(72) Inventor: COFFINARDI, Giovanni, 25030 Brandico (BS) (IT)
(74) Representative: Botti & Ferrari S.p.A.
(86) International application number: PCT/EP2020/055544
(87) International publication number: WO 2020/178280

(56) References cited:
- JP-A- 2007 057 286
- JP-A- 2007 205 881
- US-A- 5 841 282
- NORMAN W GARRICK ET AL: "A portable method to determine chloride concentration in roadway pavements", 1 October 2002 (2002-10-01), XP055639462, Retrieved from the Internet <URL:https://pdfs.semanticscholar.org/2002/a3d5428dc9280ea10fefbd07245e7e1bd820.pdf> [retrieved on 20191106]
- YE Z ET AL: "Vehicle-based sensor technologies for winter highway operations", IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTS. SG1 2AY, UK, vol. 6, no. 3, 1 September 2012 (2012-09-01), pages 336 - 345, XP006043078, ISSN: 1751-956X, DOI: 10.1049/IET-ITS.2011.0129

## Description

### Field of application

The present invention relates to a device for determining the salt concentration on a road surface and a method for determining the salt concentration that uses this device.

Furthermore, the present invention relates to a service vehicle, particularly to a vehicle in service on motorways, on which a device for determining the salt concentration is mounted.

### Background

As is well-known, in cold regions subject to ice formation it is usual to spread an anti-freezing salt on the road surface during the winter season in order to prevent the formation of ice sheets and improve road traffic safety.

Since this anti-freezing salt, usually consisting of sodium chloride or calcium chloride, has a certain environmental impact it is desirable to spread the necessary minimum amount of salt on the road surface to ensure the road traffic safety.

In order to do this, it is therefore necessary to accurately determine in advance the residual salt concentration on the road surface so that it may be established the road surface areas requiring salt spreading and the actual amount of salt to spread in these areas.

To meet this need, devices for determining the residual salt concentration on the road surface have been developed, said devices are mounted on a vehicle, especially on a service vehicle, and perform the measurements on the road at predetermined time intervals when the vehicle service crosses said road.

Such measurement devices are substantially based on reflectance measurements and comprise an element for transmitting the light generated by a light source on the road surface, and a detector or sensor for detecting the reflected light from the radiated road surface area, where such reflected light can be correlated to the salt concentration contained in the liquid (water) on the road surface measured area.

However, such measurement devices are expensive and frequently do not allow precise measurements because the amount and/or angle of the reflected light measured on the road surface is often dependent on the particular conditions of the measured surface, for example the presence of debris or liquids such as oils and/or fuel. In addition, in the case of a substantially dry road surface, determining the salt concentration with these devices is very difficult or impossible.

US 5841282 describes a soil conductivity measuring device that provides electrodes in the shape of wheels mounted on an agricultural vehicle. The measurement is performed by applying a current to the electrodes when they are in contact with the soil or are also at a certain depth therein, and the conductivity of the soil is measured as a variation of the observed potential after current application.

JP 2007 057286 describes a measurement device for the salt concentration on a road surface that provides measuring electrodes arranged to contact a vehicle tire in order to obtain an independent measurement of the road surface condition.

JP 2007 205881 describes a measurement apparatus for the salt concentration on a road surface having a wheel rotating in contact with the road surface to collect the moisture on the road surface and measuring electrodes in contact with the surface of said wheel.

The main purpose of this invention is therefore to provide a device for measuring the salt concentration on a road surface mountable on a service vehicle and which allows more accurate measurements of the salt concentration during the service vehicle progress on the road, so as to overcome the drawbacks aforementioned with reference to the prior art.

Another purpose of this invention is to provide a device for measuring the salt concentration on the road surface, as aforementioned, which can be easily used and produced at low costs.

### Summary of the invention

The solution idea behind this invention is to determine the salt concentration on the road surface with a device mountable on a service vehicle capable of making electrical measurements instead of reflective measurements.

Based on this solution, the purposes mentioned above are primarily achieved by a device for determining the salt concentration on a road surface, the device comprising:
- a plate having a first portion adapted to be fixed on an outer part of a service vehicle and a second portion tilting with respect to the first portion,
- at least two electrodes fixed to said second portion of the plate and protruding therefrom,
- motorized means for rotating said second portion of the plate between a resting position, in which it is substantially on the same plane as said first portion of the plate so that, in use, it is raised with respect to the road surface crossed by said service vehicle, and an operating position, in which said second portion of the plate, in use, is lowered so as to allow said electrodes to contact said road surface during the advancement of said service vehicle, and
- an electrical circuit comprising said electrodes and a command and control unit (CPU) arranged for commanding the application of a current or voltage between said electrodes when the same are in the aforementioned operating position and for receiving and elaborating data relating to the variation of an electrical property, especially conductivity and/or voltage, measured in said circuit and related to the salt concentration between said electrodes so as to determine the salt concertation on said road surface.

It has surprisingly been found that a device as above allows to accurately detect the residual salt concentration on the road surface through variation measurements of electrical properties while the service vehicle on which the device is mounted advances on that road surface.

In particular, it has been found that by applying a voltage or an electric current between the electrodes of the device at least one electrical property of the circuit, such as electrical resistance, conductivity, capacity, dielectric constant, voltage etc., undergoes a variation which essentially depends on the salt concentration on the road surface between the electrodes and is not influenced by the road surface specific conditions, such as humidity, debris, etc.

Therefore, the present invention allows to accurately determine through the measurements with the device of the invention on a given road section, the sufficient amount of salt to spread in that road section in order to ensure the road traffic safety, thereby significantly reducing the environmental impact resulting from the salt spreading and its related costs.

According to a preferred embodiment, the determination of the salt concentration on the road surface occurs by means of a double voltage reading (voltage variation between the electrodes measured against a voltage applied to the circuit) and current (current variation against a current applied to the circuit). This allows to advantageously determine the salt concentration even in conditions of dry road surface where the measurement through the current variation could be impossible and unsatisfactory due to a reduced or absent conductivity of the dry road surface section that is between the measuring electrodes.

According to one embodiment of the present invention, the device comprises a display unit connected to said command and control unit for displaying salt concentration values received and processed by said command and control unit.

The purposes mentioned above are also achieved by a service vehicle comprising a device as described.

In particular, the device according to the invention can be mounted so that the electrodes and their respective handling components are mounted on any outer part of the vehicle, for example an outer lateral part of the vehicle or preferably under the vehicle platform.

The purposes mentioned above are also achieved by a method for determining the salt concentration on a road surface when crossed by a service vehicle comprising a device as described above, the method comprising the steps of:
- arranging the electrodes in the operating position in contact with said road surface;
- applying a voltage and/or electrical current between said electrodes,
- measuring a variation of an electric property in the electrical circuit of said device correlated to the salt concentration between said electrodes, and
- processing data related to the variation of an electrical property measured in said circuit and related to the salt concentration between said electrodes so as to determine the salt concentration on said road surface.

According to one embodiment, the method further comprises the displaying of salt concentration data related to the performed measurements of said variation of the electric property.

According to one embodiment, the electric property is chosen from electrical conductivity, electrical resistance, electrical capacity, voltage and dielectric constant.

The characteristics and advantages of the present invention will result from the description, done below, of some preferred embodiments given for information and non-limiting purposes with reference to the attached drawings.

### Brief description of the drawings

In these drawings:
- Figure 1 shows a perspective view of a device for determining the salt concentration on the road surface in a resting position, according to an embodiment of the invention;
- Figure 2 shows a perspective view of the device in Figure 1 in an operating position;
- Figures 3-5 show perspective views of a service vehicle portion on which the device of Figures 1-2 is mounted, this latter being shown in a resting position (Figure 3) and in an operating position (Figures 4-5);
- Figure 6 shows a diagram of an electrical circuit usable in the device for determining the salt concentration on the road surface according to the invention;
- Figure 7 shows a perspective view of a service vehicle portion on which a device for determining the salt concentration on the road surface is mounted according to a further embodiment of the invention, said device being shown in a resting position;
- Figure 8 shows a perspective view of the device in Figure 7 in an operating position;
- Figure 9 shows a perspective view of a service vehicle portion on which the device of Figures 7-8 is mounted, this latter being shown in an operating position;
- Figures 10 and 11 show perspective views of a service vehicle portion on which a device for determining the salt concentration on the road surface not according to the invention is mounted;
- Figures 12 and 13 show a perspective view and a lateral view respectively of a device for determining the salt concentration on the road surface in a resting position, according to an embodiment of the invention;
- Figures 14 and 15 show a perspective view and a lateral view respectively of the device in Figure 12 in an operating position;
- Figure 16 shows a perspective view of a service vehicle portion on which the device of Figures 12-15 is mounted, this latter being shown in a resting position;
- Figures 17-18 show a perspective view and a rear view respectively of a service vehicle portion on which the device of Figures 11-15 is mounted, this latter being shown in an operating position;
- Figure 19 shows a perspective view of a service vehicle flipped portion on which a device for determining the salt concentration on the road surface is mounted in a resting position, according to a further embodiment of the invention;
- Figure 19A shows a perspective view of a detail of the device for determining the salt concentration on the road surface shown in Figure 19;
- Figure 20 shows a perspective view of a service vehicle flipped portion on which the device for determining the salt concentration on the road surface, shown in Figure 19, is mounted in an operating position;
- Figure 21 shows a lateral view of a service vehicle portion on which the device for determining the salt concentration on the road surface shown in Figure 19 is mounted, said device being shown both in the resting position and in the operating position;
- Figure 21A shows a perspective view of a detail of the device for determining the salt concentration on the road surface shown in Figure 21;
- Figures 22 and 23 show a magnified view of the device for determining the salt concentration on the road surface of Figure 19 both in the resting position and in the operating position, and of a detail of this device respectively;
- Figure 24 shows a perspective view of a service vehicle flipped portion on which a device for determining the salt concentration on the road surface is mounted in a resting position, according to a further embodiment of the invention;
- Figure 24A shows a perspective view of a detail of the device for determining the salt concentration on the road surface shown in Figure 24;
- Figure 25 shows a perspective view of a service vehicle flipped portion on which the device for determining the salt concentration on the road surface shown in Figure 24 is mounted in an operating position;
- Figure 26 shows a rear view of a service vehicle portion on which the device for determining the salt concentration on the road surface shown in Figure 24 is mounted in an operating position.

### Detailed description

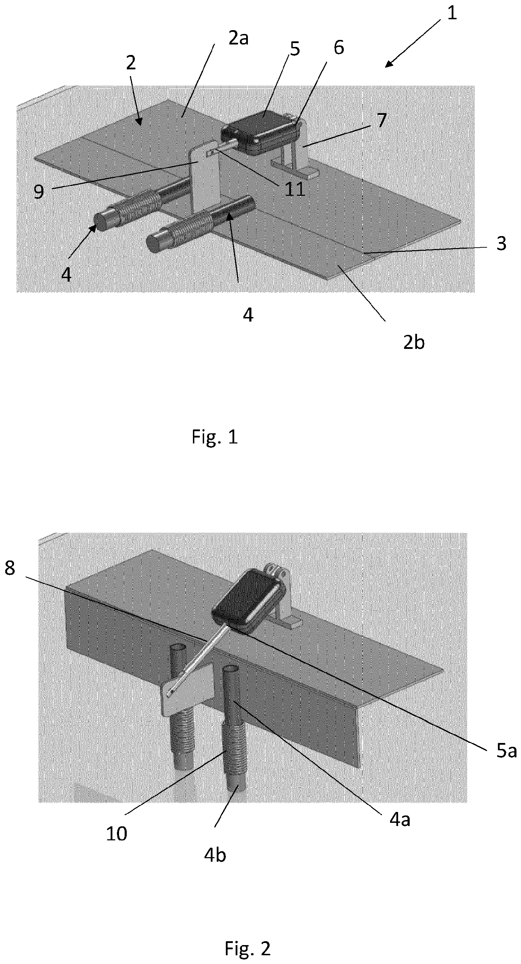

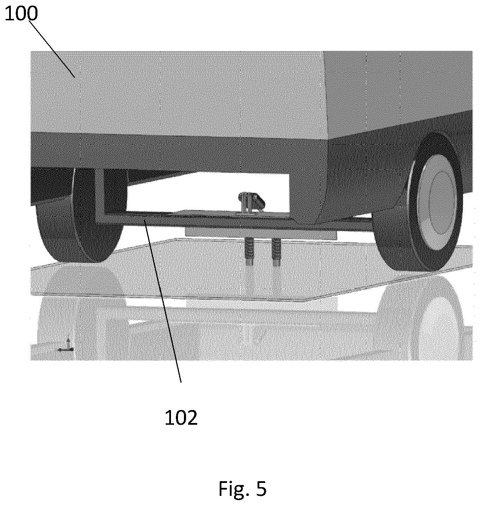

With reference to Figures 1-5, a device for determining the salt concentration on the road surface according to an embodiment of the invention is globally indicated by 1.

Device 1 comprises a plate 2 having a first portion 2a intended to be fixed to a vehicle 100, for example a vehicle in service on motorways, and a mobile portion 2b tilting with respect to the first portion 2a around a hinge line 3 joining the first portion 2a and the second portion 2b of the plate 2. To the second portion 2b of the plate 2 are fixed two tubular electrodes 4 with a substantially cylindrical section parallel to each other protruding of a predetermined section from the free end of the second portion 2b of the plate, that is protrude from the side opposite to the side joining the second portion 2b to the first portion 2a through the hinge 3.

More specifically, the second portion 2b of the plate 2 is movable between a resting position in which it is substantially on the same plane as the first portion 2a of the plate 2 so that, in use, it turns out to be raised with respect to the road surface 120 of the road crossed by the service vehicle 100, and an operating position in which the second portion 2b of the plate 2 is, in use, lowered (that is displaced below) with respect to the first portion 2a so as to allow the electrodes 4 to contact the surface 120 of the road crossed by the vehicle 100 and eventually crawling on it as this vehicle 100 progress. In this operating position, the second portion 2b of the plate 2 can be substantially perpendicular to the first portion 2a of the plate 2 except for any roughness of the road surface 120.

The displacement of the second portion 2b of the plate 2 between the resting position and the operating position can be performed by means of a motor 5 electrically commanded by a command and control unit (which will be described below) and hinged through a hinge 6 to a support bracket 7 fixed on the first portion 2a of the plate 2 and protruding superiorly therefrom. In particular, the motor 5 is provided with a sliding rod 8 partially protruding from the body of the motor 5 and hinged to the free end, through a hinge 11, to a plate-like element 9 fixed on the second portion 2b of the plate 2 and protruding substantially perpendicularly from the latter.

In the resting position of the plate 2, the rod 8 is in a retracted position resulting almost entirely embedded in the body of the motor 5 while the motor 5 is in a raised position away with respect to the upper surface of the first portion 2a of the plate 2 (Figure 1). In the passage from the resting position to the operating position, the motor 5 is commanded so as to allow the sliding of the rod 8 outwards from an opening 5a of the motor body 5 and the lowering of the motor body 5 towards the first portion 2a of the plate 2 by rotary movement around the axis of the hinge 6 of the bracket 7. This entails the simultaneous lowering of the portion 2b of the plate 2 until it reaches its operating position with the electrodes 4 in contact with the road surface 120.

Vice versa, in the passage from the operating position to the resting position, the motor 5 is commanded so as to allow the partial withdrawal of the rod 8 in the body of the motor 5 through the opening 5a and the raising of the motor body 5 away from the first portion 2a of the plate 2 by rotary movement around the axis of the hinge 6 of the bracket 7. This entails the simultaneously raising of the portion 2b of the plate 2 until it reaches its resting position in which it is substantially on the same plane as the first portion 2a of the plate 2 with the electrodes 4 in a raised position with respect to the road surface 120 and therefore no longer in contact with it.

In the present embodiment, each electrode 4 has advantageously a first portion 4a fixed to the second portion 2b of the plate 2 and a second portion 4b protruding from the second portion 2b of the plate 2 so as to allow it to contact the road surface 120, the second portion 4b of each electrode 4 being elastically connected, through a spring 10, to the respective first portion 4a and having a greater diameter than that of the first portion 4a so as to allow it to slide elastically over the first portion 4a.

In this way, in the operating position with the electrodes 4 in contact with the road surface 120, the roughness of the road surface experienced by the device 1 during the vehicle 100 progress is compensated by the elastic sliding movement of the second portion 4b of the electrodes 4 on the respective portions 4a and eventually, within certain limits, from the tilting movement of the portion 2b of the plate 2 around the hinge 3 between the first portion 2a and the second portion 2b of the plate 2 and around the hinge 11 between the plate-like element 9 and the rod 8, while the portions 4b of the electrodes 4 are continuously kept in contact with the road surface 120.

Electrodes 4 can be made with any electrically conductive material, metallic or non-metallic and preferably with appropriate characteristics of abrasion resistance and mechanical resistance to functional shocks due to the use of device 1 according to the invention.

Advantageously, electrodes 4 can be made of graphene.

Device 1 can be mounted on any outer part of the vehicle 100, with special reference, to the components of the same described above.

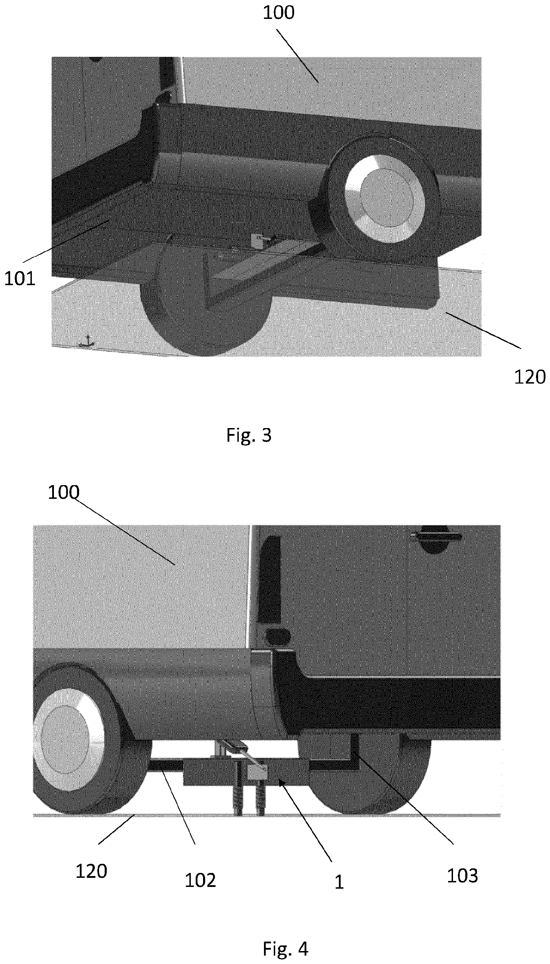

In particular, as illustrated in Figures 3-5, the device 1 can be advantageously mounted under the platform 101 of the service vehicle 100 in a spaced position therefrom, for example on a transverse bar 102 held in a spaced relationship from the platform 101 by spacers 103 conventionally fixed to the platform 101, for example by welding, fixing with screws/bolts or other functionally equivalent systems.

In this regard, the plate 2 bearing the electrodes 4 and the components described above for its handling between the resting position and the operating position can be fixed in a conventional manner for example by fixing with screws/bolts or other functionally equivalent systems, with its first portion 2a on the upper part of the bar 102 exposing the second portion 2b and the hinge 3 towards the front or rear side of the vehicle 100, preferably towards the rear side.

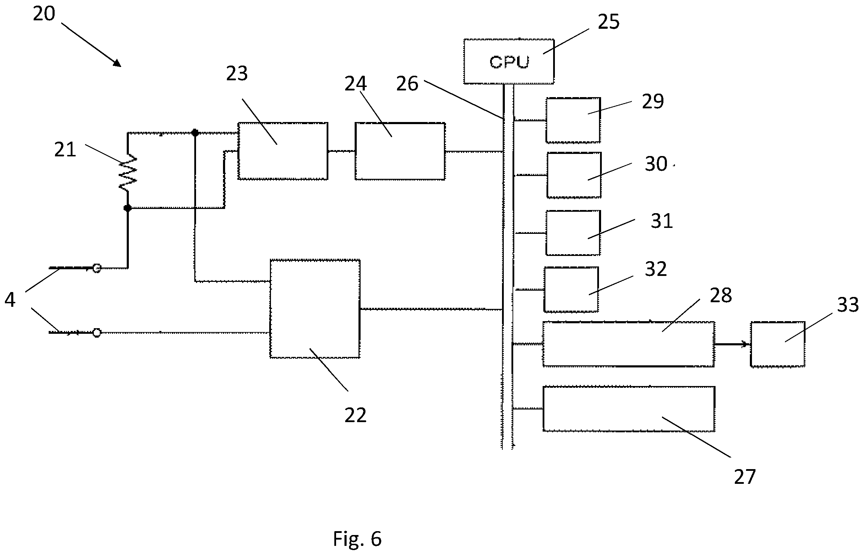

The device 1 further comprises an electrical circuit 20 to which electrodes 4 are connected. A schematic diagram of an embodiment of this electrical circuit is shown in Figure 6.

Circuit 20 comprises a resistor 21 having a constant resistance value, an oscillation unit 22, a voltage and/or electric current measuring unit 23 and an A/D conversion unit 24 and a command and control unit 25 (CPU). The resistor 21, the oscillation unit 22, and the voltage and/or electric current measuring unit 23 are electrically connected to each other and to the electrodes 4 and the A/D conversion unit 24 is electrically connected to the voltage and/or electric current measuring unit 23. Furthermore, the A/D conversion unit 24 and the oscillation unit 22 are electrically connected to the command and control unit 25 bidirectionally through a bus 26.

To the command and control unit 25 are also electrically connected, through the bus 26, an input interface 27, an output interface 28 and optionally one or more sensors mountable on the service vehicle 100 for measuring other parameters optionally correlated with the determination of the salt concentration on the road surface. For example, in the present embodiment, the command and control unit 25 is also connected to a sensor 29 for measuring the external temperature, to a sensor 30 for measuring the road surface temperature, to a sensor 31 for measuring humidity and to a sensor 32 for measuring the dew point, also called frost point if it is at a temperature below 0°C.

The output interface 28 is also electrically connected to a display unit 33 for displaying the data of the measurements performed with special reference to the determination of the salt concentration on the road surface.

Regarding the determination of the salt concentration on the road surface according to the invention, the determination is performed with the vehicle 100 moving on the road surface section 120 on which the residual salt concentration is to be determined by lowering the electrodes 4 by means of the motor 5 so as to place them in their operating position in contact with the road surface 120, whenever a measurement is desired.

In a first step, the operator/driver of the vehicle 100 can send to the command and control unit 25 a start signal or instructions to perform the measurement of the salt concentration on the road surface 120 through the input interface 27. The command and control unit 25 can therefore control the electrical connection of the oscillation unit 22 and the resistor 21 to the electrodes 4 and command the sending of a predetermined voltage (for example 5 V) and/or a predetermined electric current to the electrodes 4 by means of the oscillation unit 22.

Then, the command and control unit 25 can command to the voltage measurement unit 23 to measure the voltage and/or the electric current at the resistor 21. Since the voltage or current measured at the resistor 21 varies as a function of the resistance between the electrodes 4 which, in turn, depends on the salt concentration in the saline film between the electrodes, the measurement of the voltage and/or electric current at the resistor 21 indirectly provides a measurement of the residual salt concentration on the road surface 120 between the electrodes 4.

Data/signals of the measurement performed by the voltage or current measurement unit 23 are sent to the command and control unit 25 which can also process them in correlation with the data/signals of external temperature measured by sensor 29, of road surface temperature measured by the sensor 30, external humidity measured by the sensor 31 and/or dew point/frost point measured by the sensor 32.

The processing may also include a comparison with reference data of the saline concentration optionally in correlation with one or more of the parameters indicated above, that is external temperature, road surface temperature, external humidity and/or dew point/frost point.

The processing performed by the command and control unit 25 results in an electrical signal related to the salt concentration measured on the road surface 120 which is sent to the output interface 28 and, from this, to the display unit 33.

The display 33 can show the salt concentration measured on the road surface 120 in any desired form, for example as a numeric value, percentage, dedicated graph, light and/or sound indication, eventually with colors and/or sounds which vary as a function of predetermined intervals of saline concentration or other functionally equivalent systems able to provide the operator with rapid feedback or indication of the measured salt concentration.

It should be noted that the command and control unit 25 can also separately process the data/ signals received from each of the sensors 29, 30, 31 and 32 and sends corresponding signals to the output interface 28 and, from this, to the display 33 for displaying in any desired form the measurements performed by the sensors of 29, 30, 31 and 32.

Furthermore, the command and control unit 25 is provided with at least one memory containing predefined programs and this memory can also be of a writable type to record, for example, the data of the displayed measurements which, in turn, can be read from an electronic media (for example computer, tablet, smartphone or similar) and/or printed as required.

Advantageously, the display 33 can be mounted in the cockpit of the vehicle 100, for example on the dashboard, while the sensors 29, 30, 31 and 32 are mounted on the outer part of the vehicle 100 in a suitable position for their functioning, for example on an outer mirror of the vehicle 100.

Furthermore, the display 33 can be equipped with a router for the transmission of the measured data to a remote computer (server) which, in turn, can provide real-time viewing, storage and/or allow access to the detection history. The router can operate with conventional transmission protocols, for example with LTE or GPS transmission.

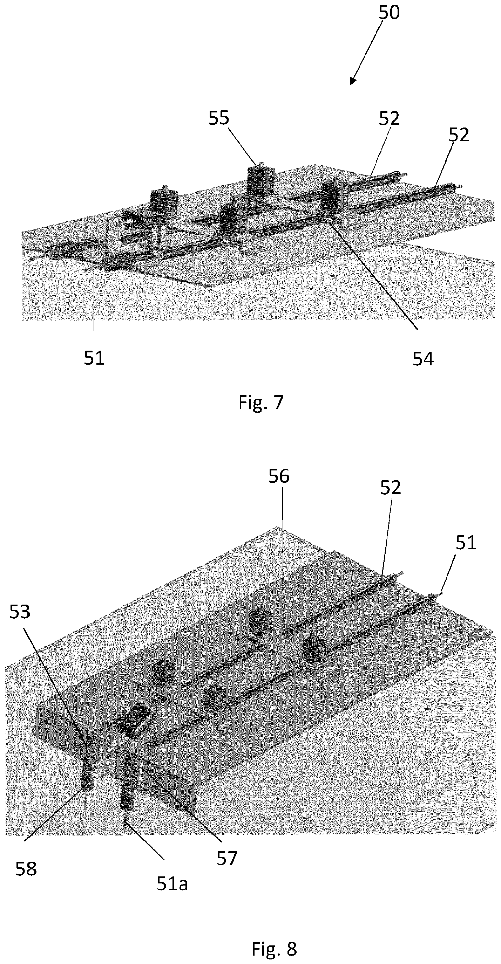

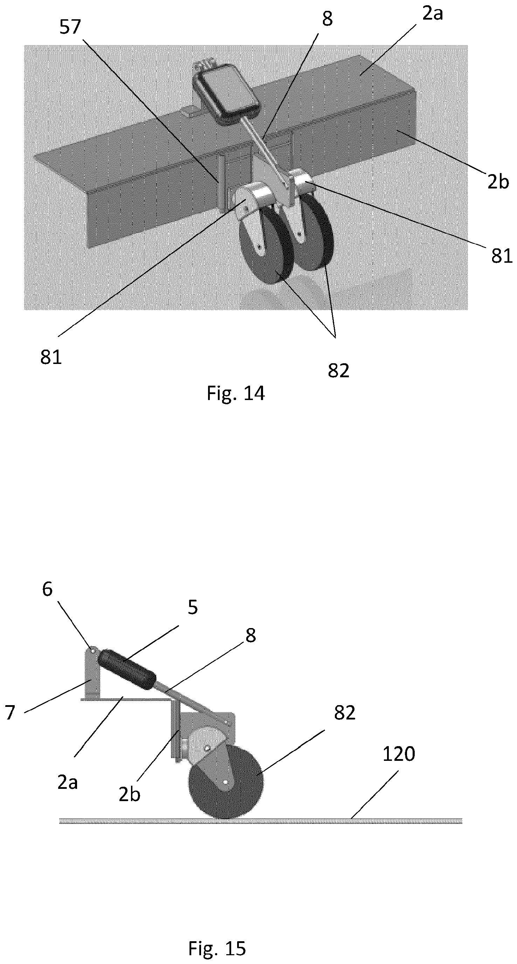

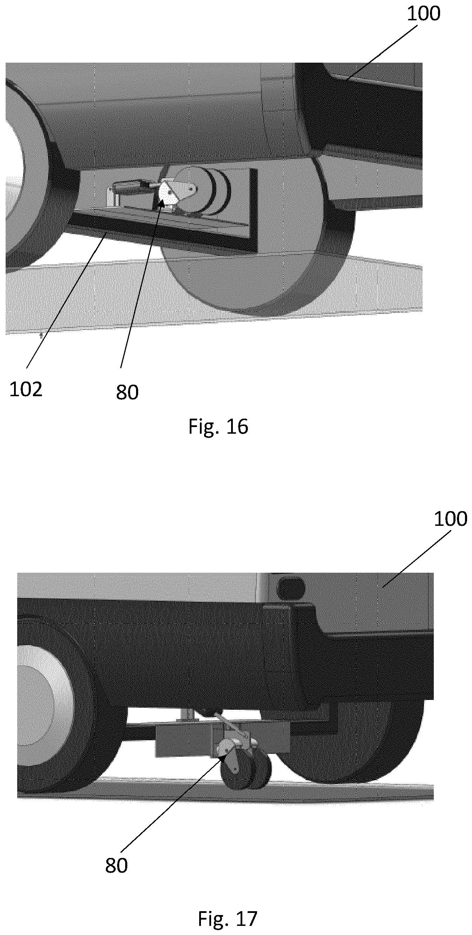

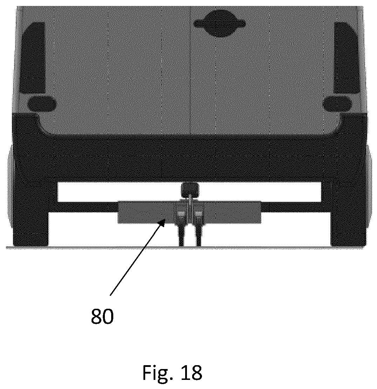

Figures 7-9 and 12-18 illustrate further embodiments of the device for determining the salt concentration on the road surface according to the present invention.

To the elements of these further embodiments of the device according to the invention which are structurally and/or functionally equivalent to corresponding elements of the device 1, described above, will be assigned the same numbers of the latter in the description below. Furthermore, for brevity, these elements of these further embodiments will not be further described unless necessary for the understanding of the present invention.

Figures 7-9 illustrate a device for determining the salt concentration on the road surface according to a further embodiment of the invention, which is globally indicated by 50.

The device 50 differs from the device 1 described above in that the electrodes are in the shape of cables 51 of conductive material, for example a metallic material, passing inside first tubular sections 52 and second tubular sections 53 fixed to the first portion 2a and to the second portion 2b of the plate 2 in a manner per se conventional, respectively.

In particular, an end portion 51a of the cables 51 protrudes of a predetermined length from the end of the second tubular sections 53 to face, in use, towards the road surface 120 so as to put the cables 51 in contact with the road surface 120 in the operating position of the device 50. Differently, the opposite end portion of the cables 51 protrudes from the first tubular sections 52 and can be wrapped in respective reels (not shown) providing a reserve of said cables.

Advantageously, the cables 51 can slide by dragging inside the respective tubular sections 52, 53 by means of gear wheels 54 protruding inward of the first tubular sections 52 from corresponding openings made thereon and in pressure abut against the cables 51. These gear wheels 54 are supported in pairs by respective support elements 56 transversely fixed on the first portion 2a of the plate 2 straddling the first tubular sections 52 and can be operated by respective motorized means 55, even they supported on the supporting elements 56 and in electrical communication with the command and control unit 25.

The device 50 further comprises sensors 57 fixed on the second portion 2b of the plate 2 near respective second tubular sections 53 for detecting the presence or absence of the protruding part 51a of the cables 51 or a reduction in the length of this protruding part 51a below a predetermined minimum value. The sensors 57 are also in electrical communication with the command and control unit 25.

In the operating position of the device 50, the protruding portion 51a of the cables 51 crawls on the road surface 120 due to the progress of the vehicle 100 and could break or deteriorate reducing the useful length for the measurement of the salt concentration. Therefore, whenever this circumstance occurs, the sensors 57 detect the absence or reduction below a predetermined minimum length of the protruding portion 51a of the cables 51 transmitting a signal to the command and control unit 25 which, in turn, provides to command the actuation of the motorized means 55 and their respective gear wheels 54. The gear wheels 54 therefore, acting on the portions of the cables 51 which are inside the first tubular sections 52, push the cables 51 towards the second tubular sections 53 causing at the same time the (partial) unwrapping of the reserve of said cables 51 from the respective reels and thus restoring the terminal portion 51a of the cables 51 protruding from the second tubular sections 53.

Upon achievement of a predetermined length of this protruding portion 51a of the cables 51, the sensors 57 transmit a corresponding signal to the command and control unit 25 that command the stop of the motorized means 55.

In this way, with an appropriate reserve of cables, it is possible to advantageously perform measurements of the salt concentration for relatively long periods without interruptions due to the need to replace damaged electrodes if any.

It should also be noted, advantageously, that in the present embodiment the ends of the second tubular sections 53 facing, in use, towards the road surface 120 are connected to cushioning springs 58 to compensate for the possible bumps deriving from the roughness of the road surface experienced by the device 50 during the vehicle 100 progress together, within certain limits, with the tilting movement of the portion 2b of the plate 2 around the hinge 3 between the first portion 2a and the second portion 2b of the plate 2 and the hinge 11 between the plate-like element 9 and the rod 8, while the protruding portions 51a of the cables 4 are continuously kept in contact with the road surface 120.

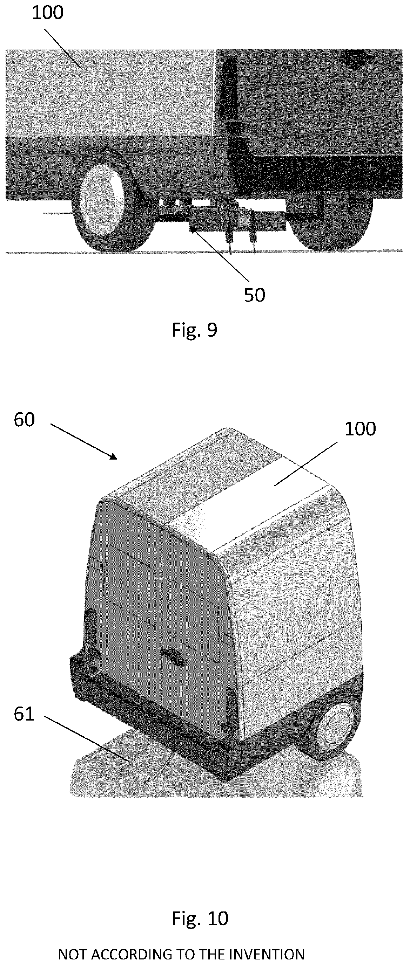

Figure 10 illustrates a device for determining the salt concentration on the road surface not according to the invention, the device being globally indicated by 60 and being shown mounted on a service vehicle 100.

The device 60 differs from the device 1 described above in that the plate 2 with the handling components associated with it are replaced by two electrodes in the shape of flexible ropes 61 of conductive material connected to an electrical circuit, for example like the one described above. These ropes 61 can pass through corresponding holes made on the lower side of the platform of the vehicle 100 and can be associated with motorized means (not shown) in communication with the command and control unit 25 to be moved from a resting position in which they are withdrawn inside the vehicle 100 or raised so as to be in a spaced relationship with respect to the road surface 120 and an operating position in which the ropes 61 are lowered so as to contact the road surface 120 in order to measure the salt concentration.

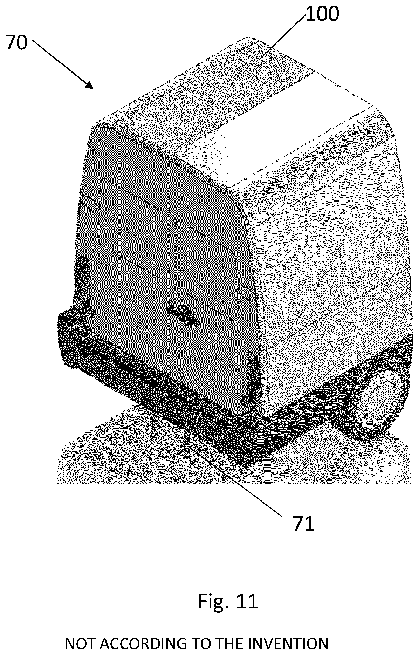

Figure 11 illustrates a device for determining the salt concentration on the road surface not according to the invention, the device being globally indicated by 70 and being shown mounted on a service vehicle 100.

The device 70 differs from the device 1 described above in that the plate 2 with the handling components associated with it are replaced by two electrodes in the shape of flexible tubes 71 of conductive material connected to an electrical circuit, for example like the one described above. These flexible tubes 71 can pass through corresponding holes made on the lower side of the platform of the vehicle 100 and can be associated with motorized means (not shown) in communication with the command and control unit 25 to be moved from a resting position in which they are withdrawn inside the vehicle 100 or raised so as to be in a spaced relationship with respect to the road surface 120 and an operating position in which the flexible tubes 71 are lowered so as to contact the road surface 120 in order to measure the salt concentration.

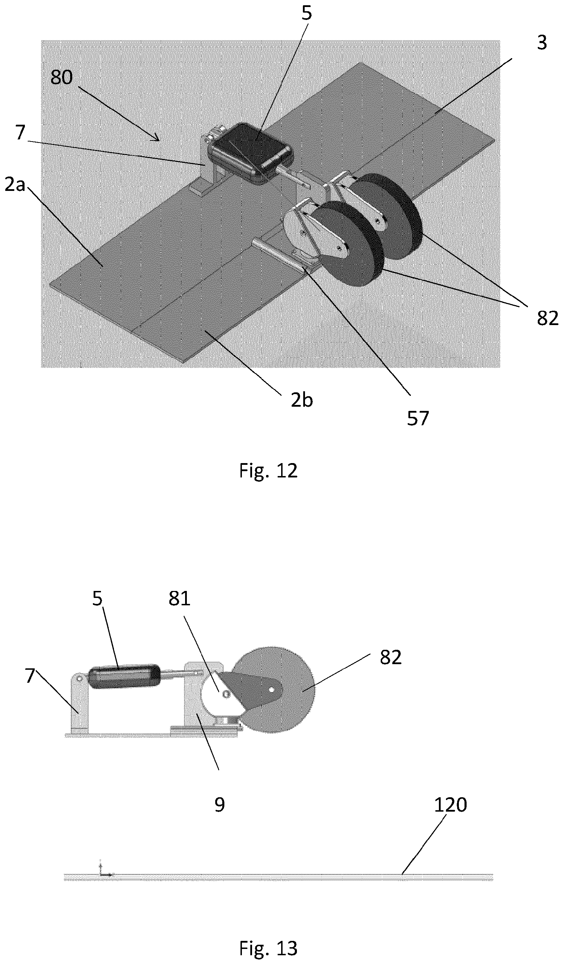

Figures 12-18 illustrate a device for determining the salt concentration on the road surface according to a further embodiment of the invention, the device being globally indicated by 80 and being shown also mounted on a service vehicle 100.

The device 80 differs from the device 1 described above in that the electrodes are in the shape of wheels 82 comprising conductive material, for example a metallic material, which are rotatably connected to a respective support 81 which is, in turn, fixed, for example in a removable way, to the second mobile portion 2b of the plate 2. The wheels 82 are in electrical communication with the command and control unit 25 and protruding below from the free end of the second mobile portion 2b of the plate 2 so as to contact the road surface 120 in the operating position of the plate 2 for the measurement of the salt concentration.

The device 80 further comprises sensors 57 fixed on the second portion 2b of the plate 2 near the supports 81 with their respective wheels 82 and are in electrical communication with the command and control unit 25.

The sensors 57 can detect the wear wheels 82 during the operation of the device 80 and can transmit a signal to the command and control unit 25 upon achievement of a predetermined minimum thickness of the wheels 82 tread. This signal can be viewed on the display 33 informing the operator of the need to replace the wheels 82.

Advantageously, the wheels 82 can be fixed to their respective supports 81 through cushioning elements (springs) to compensate the road roughness while using the device 80 on a moving vehicle 100 for determining the salt concentration.

In one embodiment, the wheels 82 can be made of a conductive material with high mechanical resistance and durability as graphene. In another embodiment, the wheels 82 can be made in the shape of brushes provided with bristles of a conductive material, in particular stainless steel, among which vulcanized rubber is inserted (embedded), for example through known injection processes.

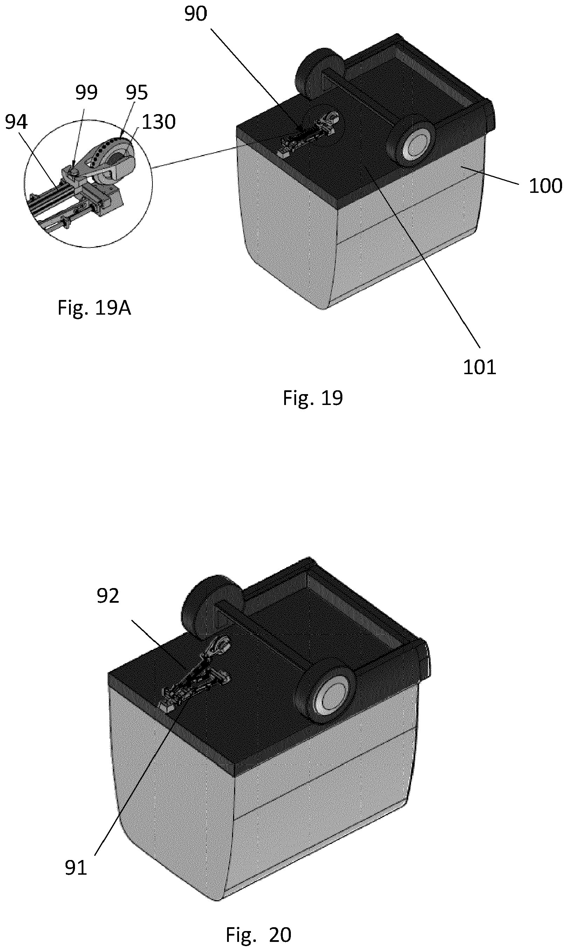

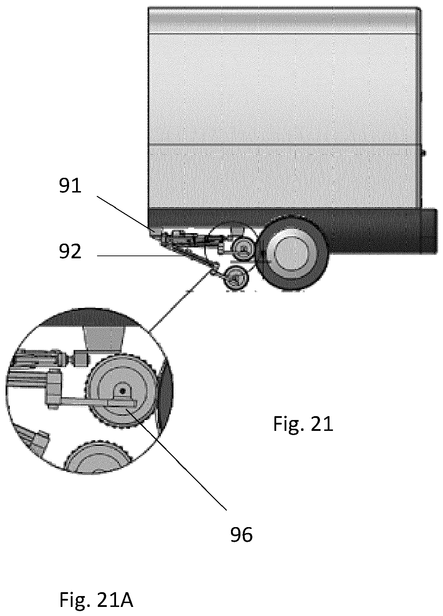

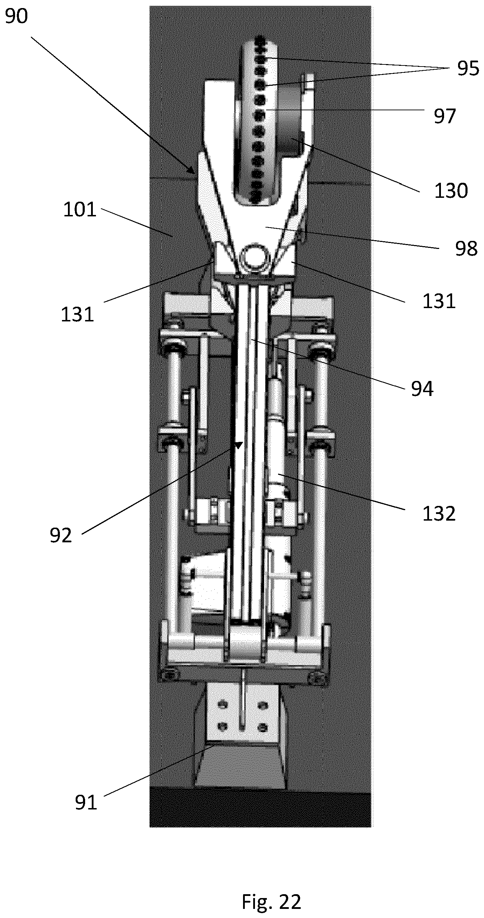

Figures 19-23 illustrate a device for determining the salt concentration on the road surface according to a further embodiment of the invention, the device being globally indicated by 90 and being shown mounted on a service vehicle 100.

The device 90 differs from the device 1 described above for the characteristics described below.

The device 90 comprises a support having a first fixed part 91 intended to be fixed to a vehicle 100, in particular on the platform outer bottom 101 of said vehicle 100, and a second mobile part 92 rotatable with respect to the first fixed part around a hinge 93 joining the first fixed part and the second mobile part.

In particular, the second mobile part 92 comprises an arm 94 hinged to the fixed part 91 along the hinge 93 and connected at its free end to a plurality of electrodes 95.

These electrodes 95 are radially placed on a wheel 96 and embedded in the material (for example vulcanized rubber) forming the wheel tread 97 except for an end portion protruding from the tread 97 which, in the operating position of the device 90, comes in contact with the road surface for performing the measurement of the salt concentration.

In the present embodiment, the wheel 96 bearing the electrodes 95 is hinged between the arms of a bracket 98 with a substantially V section and the bracket 98 with the interposition of a rotary connector 130 which is electrically connected to the electrodes 95 and to a command and control unit 25. The bracket 98 is, in turn, constrained to a free end portion of the arm 94 through a pivot 99.

The arm 94 and the wheel 96 bearing the electrodes 95 are movable in rotation between a resting position in which they are raised with respect to the road surface 120 approaching the fixed part 91 of the support and arranged substantially near the platform outer bottom 101 of the vehicle 100, and an operating position in which they are lowered away from the fixed part 91 of the support to allow the electrodes 95 to contact the road surface 120.

Advantageously, in the present embodiment, the bracket 98 is constrained to the free end portion of the arm 94 so as to be rotatable (floating) in both opposite directions with respect to the arm 94 around the axis of the pivot 99 up to a predetermined angle, for example up to 30 °. The rotation limit of the bracket 98 with the wheel 96, integral with it, in both opposite directions is determined by a pair of opposing stops 131 provided on the free end portion of the arm 94 and on which the bracket abuts upon reaching the rotation maximum angle in a given direction.

In this way, in the operating condition of the device 90, the wheel 96 bearing the electrodes 95 could advantageously follow the tires curvature of the vehicle 100 which crosses the road surface on which the salt concentration measurement is to be carried out, thus avoiding localized stresses on the wheel 96 due, for example, to dragging and reducing wear so as to increase the service life of the measuring electrodes 95.

The device 90 further comprises an extensible (telescopic) piston motor 132 operatively connected to a carriage 133 sliding along rods 134 connected to the fixed part 91 of the support 90, the carriage 133 being, in turn, connected to the mobile arm 94 through a pair of articulated arms 135.

More specifically, each articulated arm 135 is hinged to the mobile arm 94 and to the carriage 133, at a longitudinal slot 136 of the carriage along which it is sliding.

The motor 132 is also connected to the command and control unit 25 and is commanded by the latter to move the mobile arm 94 with the electrodes 95 between the resting position and the operating position.

In the passage from the operating position to the resting position, the carriage is moved by the motor 132 towards an end section of the rods 134 causing the raising of the arms 135 with simultaneous sliding of the same along the slots 136 and the lifting of the mobile arm 94 and of the electrodes 95 integral with it from the road surface. Upon reaching the resting position, the articulated arms 135 and the mobile arm 94 are substantially parallel to the rods 134 and near the platform outer bottom 101 of the vehicle 100.

Vice versa, in the passage from the resting position to the operating position, the carriage is moved by the motor 132 towards a central section of the rods 134 causing the sliding of the articulated arms 135 along the slots 136 with simultaneous lowering of the same and of the mobile arm 94 until the electrodes 95 integral with it contact the road surface.

The device 90 further comprises a pair of conventional shock absorbers 137 which are operatively connected to the mobile arm 94. These shock absorbers allow to compensate mechanical stresses deriving from the road surface roughness that the mobile arm 94 and the electrodes 95 can experience in the measuring operating position during the crossing of the road surface by the vehicle 100.

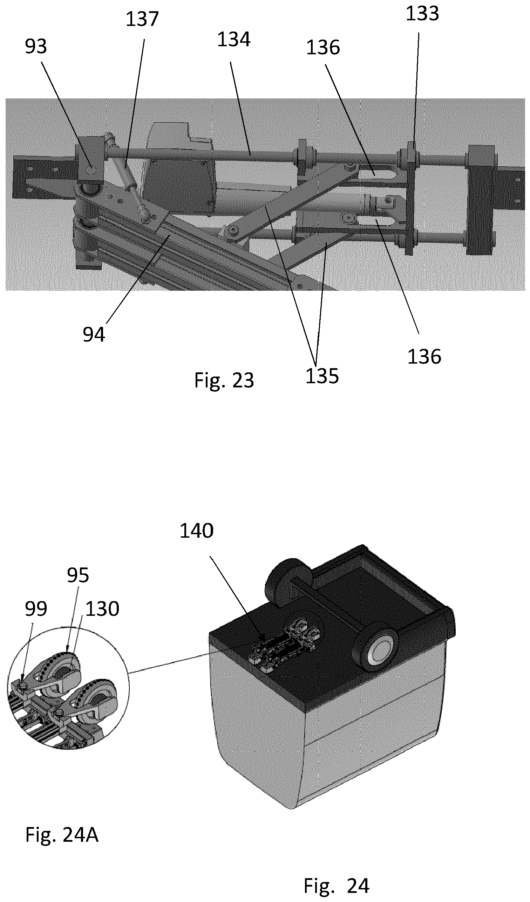

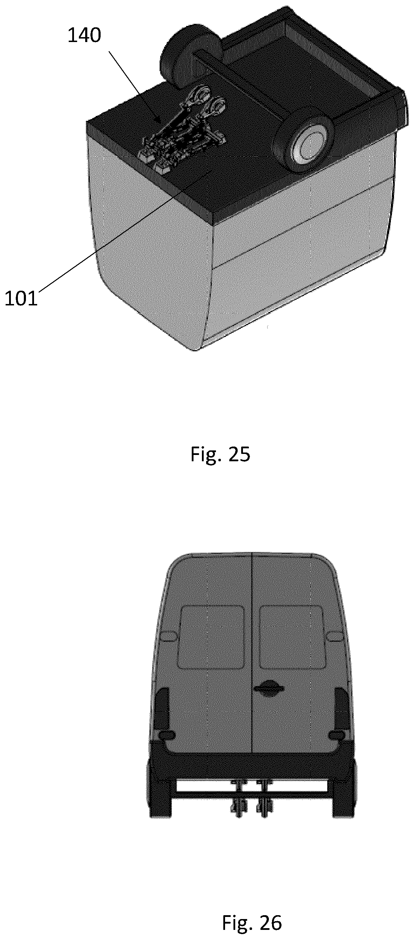

Figures 24-26 illustrate a device for determining the salt concentration on the road surface comprising two devices 90 as described above mounted side by side on a service vehicle 100.

Both devices 90 are connected to the command and control unit 25 and can be used independently. For example, they can be used simultaneously to have multiple measurements of the salt concentration per unit of monitored road surface, or one of the two devices can replace the other, for example in the event of a malfunction of the latter without having to interrupt the ongoing measurements.

In conclusion, the present invention fully fulfills the purposes and achieves remarkable advantages, among which, in addition to those described above, the fact that the device according to the invention can be made with low costs and is easy to use.

Obviously a person skilled in the art, in order to meet specific and contingent needs, will be able to make several modifications and variations to the aforementioned device, vehicle and method for determining the salt concentration on the road surface, all of them included in the scope of protection of the invention as defined by the following claims. In particular, the features of the different embodiments described above can be combined with each other in any way generating further embodiments of the present invention.

## Claims

1. Device (1;50;80;) for determining the salt concentration on a road surface (120), the device comprising:
- a plate (2) having a first portion (2a) adapted to be fixed on an outer part of a service vehicle (100) and a second portion (2b) tilting with respect to the first portion (2a),
- at least two electrodes (4;51;82) fixed to said second portion (2b) of the plate (2) and protruding therefrom,
- motorized means (5, 55) for rotating said second portion (2b) of the plate (2) between a resting position, in which it is substantially on the same plane as said first portion (2a) of the plate (2) so that, in use, it is raised with respect to the road surface (120) crossed by said service vehicle (100), and an operating position, in which said second portion (2b) of the plate (2), in use, is lowered so as to allow said electrodes (4;51;82) to contact said road surface (120) during the advancement of said service vehicle (100), and
- an electrical circuit (20) comprising said electrodes (4;51;82;) and a command and control unit (25) (CPU) arranged for commanding the application of a current or voltage between said electrodes (4;51;82;) when the same are in the aforementioned operating position and for receiving and elaborating data relating to the variation of an electrical property measured in said circuit and correlated to the salt concentration between said electrodes (4;51;82;) so as to determine the salt concertation on said road surface.

2. Device (1;50;80;) according to claim 1, further comprising a display unit (33) connected to said command and control unit (25) for displaying salt concentration values received and eventually processed by said (25) command and control unit.

3. Device (1;50;80) according to claim 1 or 2, wherein said motorized means comprise a motor (5) hinged on said first portion (2a) of the plate (2) and having a sliding rod (8) hinged to a free end to a plate-like element (9) fixed on said second portion (2b) of the plate (2) and protruding therefrom, said motor (5) being electrically connected to said control unit (25) and being controllable by the latter to move said second portion (2b) of the plate (2) between said resting position and said operating position.

4. Device (1) according to any one of the previous claims 1 to 3, wherein said electrodes (4) are preferably made of graphene and have each a first portion (4a) fixed to said second portion (2b) of the plate (2) and a second portion (4b) protruding from said second portion (2b) of the plate (2), the second portion (4b) of each electrode (4) being elastically connected to the respective first portion (4a) and being slidable on the latter.

5. Device (50) according to any one of the previous claims 1 to 3, further comprising first tubular sections (52) fixed to said first portion (2a) of the plate (2) and second tubular sections (53) fixed to said second portion (2b) of the plate (2), said electrodes being in the shape of cables (51) passing in said tubular sections and having a portion (51a) protruding from said second portion (2b) of the plate (2), and a plurality of gear wheels (54) interacting with said cables (51) in said first tubular sections (52) and commanded by said motorized means (55) in communication with said command and control unit (25) to allow the sliding by dragging of said cables (51) towards said second tubular sections (53).

6. Device (50) according to claim 5, further comprising sensors (57) fixed on said second portion (2b) of the plate (2) to detect the presence, absence and/or reduction under a predetermined minimum length of said protruding part (51a) of the cables (51), said sensors (57) being in communication with said command and control unit (25) to allow actuation of the motorized means (55) and the respective gear wheels (54) when said protruding part (51a) of the cables (51) is absent or has a length that is less than the predetermined minimum length and stop said motorized means (55) and said respective gear wheels (54) upon reaching of at least the predetermined minimum length by said protruding part (51a) of the cables (51).

7. Device (80) according to any one of the previous claims 1 to 3, wherein said electrodes (4) are in the shape of wheels (82) which are rotatably connected to said second portion (2b) of the plate (2) and protruding therefrom, said wheels being preferably of graphene or in the shape of brushes provided with bristles of conductive material, in particular stainless steel, among which vulcanized rubber is inserted.

8. Service vehicle (100) comprising a device (1;50;80;) according to any one of the previous claims 1 to 7.

9. Method for determining the salt concentration on a road surface (120) when crossed by a vehicle (100) comprising a device according to any one of the previous claims from 1 to 7, the method comprising the steps of:
- arranging the electrodes (4;51;82;) in the operating position in contact with said road surface (120);
- applying a voltage and/or electrical current between said electrodes (4;51;82;),
- measuring a variation of an electric property in the electrical circuit (20) of said device (1) related to the salt concentration between said electrodes (4;51;82;), and
- processing data related to the variation of an electrical property measured in said circuit and related to the salt concentration between said electrodes (4;51;82;) so as to determine the salt concertation on said road surface.

10. Method according to claim 9, further comprising displaying salt concentration data related to the performed measurements of said variation of the electric property.

11. Method according to claim 9 or 10, wherein said electric property is chosen from electrical conductivity, electrical resistance, electrical capacity, voltage and dielectric constant.

## Patentansprüche

1. Vorrichtung (1;50;80;) zur Bestimmung der Salzkonzentration auf einer Straßenoberfläche (120), wobei die Vorrichtung umfasst:
- eine Platte (2) mit einem ersten Teil (2a), der an einem äußeren Teil eines Servicefahrzeugs (100) befestigt werden kann, und einem zweiten Teil (2b), der in Bezug auf den ersten Teil (2a) geneigt ist,
- mindestens zwei Elektroden (4; 51; 82), die an dem zweiten Teil (2b) der Platte (2) befestigt sind und aus diesem herausragen,
- eine motorisierte Einrichtung (5, 55) zum Drehen des zweiten Teils (2b) der Platte (2) zwischen einer Ruheposition, in der er sich im Wesentlichen auf der gleichen Ebene wie der erste Teil (2a) der Platte (2) befindet, so dass er im Gebrauch in Bezug auf die Straßenoberfläche (120), die von dem Servicefahrzeug (100) überquert wird, angehoben ist, und einer Betriebsposition, in der der zweite Teil (2b) der Platte (2) im Gebrauch abgesenkt ist, so dass die Elektroden (4;51; 82) die Straßenoberfläche (120) während der Vorwärtsfahrt des Servicefahrzeugs (100) berühren können, und
- eine elektrische Schaltung (20), die die Elektroden (4; 51; 82;) und eine Befehls- und Steuereinheit (25) (CPU) umfasst, die so beschaffen ist, dass sie das Anlegen eines Stroms oder einer Spannung zwischen den Elektroden (4; 51; 82;) befiehlt, wenn sich diese in der oben genannten Betriebsposition befinden, und dass sie Daten empfängt und verarbeitet, die sich auf die Änderung einer elektrischen Eigenschaft beziehen, die in der Schaltung gemessen wird und mit der Salzkonzentration zwischen den Elektroden (4; 51; 82;) korreliert, um die Salzkonzentration auf der Straßenoberfläche zu bestimmen.

2. Vorrichtung (1; 50; 80) nach Anspruch 1, die ferner eine Anzeigeeinheit (33) umfasst, die mit der Befehls- und Steuereinheit (25) verbunden ist, um Salzkonzentrationswerte anzuzeigen, die von der Befehls- und Steuereinheit (25) empfangen und gegebenenfalls verarbeitet werden.

3. Vorrichtung (1; 50;80) nach Anspruch 1 oder 2, wobei die motorisierten Mittel einen Motor (5) umfassen, der an dem ersten Teil (2a) der Platte (2) angelenkt ist und eine Gleitstange (8) aufweist, die an einem freien Ende an einem plattenartigen Element (9) angelenkt ist, das an dem zweiten Teil (2b) der Platte (2) befestigt ist und von diesem vorsteht, wobei der Motor (5) elektrisch mit der Steuereinheit (25) verbunden ist und durch letztere gesteuert werden kann, um den zweiten Teil (2b) der Platte (2) zwischen der Ruheposition und der Betriebsposition zu bewegen.

4. Vorrichtung (1) nach einem der vorhergehenden Ansprüche 1 bis 3, wobei die Elektroden (4) vorzugsweise aus Graphen bestehen und jeweils einen ersten Teil (4a), der an dem Teil Abschnitt (2b) der Platte (2) befestigt ist, und einen zweiten Teil (4b), der aus dem zweiten Teil (2b) der Platte (2) herausragt, aufweisen, wobei der zweite Teil (4b) jeder Elektrode (4) elastisch mit dem jeweiligen ersten Teil (4a) verbunden ist und auf diesem verschiebbar ist.

5. Vorrichtung (50) nach einem der vorhergehenden Ansprüche 1 bis 3, die ferner erste röhrenförmige Abschnitte (52), die an dem ersten Teil (2a) der Platte (2) befestigt sind, und zweite röhrenförmige Abschnitte (53), die an dem zweiten Teil (2b) der Platte (2) befestigt sind, umfasst, wobei die Elektroden die Form von Kabeln (51) haben, die in den röhrenförmigen Abschnitten verlaufen und einen Teil (51a) aufweisen, der aus dem zweiten Teil (2b) der Platte (2) herausragt, und eine Vielzahl von Zahnrädern (54), die mit den Kabeln (51) in den ersten rohrförmigen Abschnitten (52) zusammenwirken und durch die motorisierten Mittel (55) in Verbindung mit der Befehls- und Steuereinheit (25) gesteuert werden, um das Gleiten der Kabel (51) durch Ziehen in Richtung der zweiten rohrförmigen Abschnitte (53) zu ermöglichen.

6. Vorrichtung (50) nach Anspruch 5, ferner mit Sensoren (57), die an dem zweiten Teil (2b) der Platte (2) befestigt sind, um das Vorhandensein, das Fehlen und/oder die Verringerung unter eine vorbestimmte Mindestlänge des vorstehenden Teils (51a) der Kabel (51) zu erfassen, wobei die Sensoren (57) mit der Befehls- und Steuereinheit (25) in Verbindung stehen, um die Betätigung der motorisierten Mittel (55) und der jeweiligen Zahnräder (54) zu ermöglichen, wenn der vorstehende Teil (51a) der Kabel (51) nicht vorhanden ist oder eine Länge aufweist, die geringer ist als die vorbestimmte Mindestlänge, und die motorisierten Mittel (55) und die jeweiligen Zahnräder (54) bei Erreichen von mindestens der vorbestimmten Mindestlänge durch den vorstehenden Teil (51a) der Kabel (51) anzuhalten.

7. Vorrichtung (80) nach einem der vorhergehenden Ansprüche 1 bis 3, **dadurch gekennzeichnet, dass** die Elektroden (4) die Form von Rädern (82) haben, die drehbar mit dem zweiten Teil (2b) der Platte (2) verbunden sind und aus diesem herausragen, wobei die Räder vorzugsweise aus Graphen bestehen, oder die Form von Bürsten haben, die mit Borsten aus leitfähigem Material, insbesondere rostfreiem Stahl, versehen sind, zwischen die vulkanisierter Gummi eingefügt ist.

8. Servicefahrzeug (100) mit einer Vorrichtung (1; 50; 80;) nach einem der vorhergehenden Ansprüche 1 bis 7.

9. Verfahren zur Bestimmung der Salzkonzentration auf einer Straßenoberfläche (120), wenn diese von einem Fahrzeug (100) überquert wird, mit einer Vorrichtung nach einem der vorhergehenden Ansprüche 1 bis 7, wobei das Verfahren die folgenden Schritte umfasst:
- Anordnen der Elektroden (4; 51; 82) in der Betriebsposition in Kontakt mit der Straßenoberfläche (120);
- Anlegen einer Spannung und/oder eines elektrischen Stroms zwischen den Elektroden (4; 51; 82;),
- Messen einer Änderung einer elektrischen Eigenschaft im Stromkreis (20) der Vorrichtung (1), die mit der Salzkonzentration zwischen den Elektroden (4; 51; 82) zusammenhängt, und
- Verarbeiten von Daten, die sich auf die Veränderung einer elektrischen Eigenschaft beziehen, die in der Schaltung gemessen wird und mit der Salzkonzentration zwischen den Elektroden (4; 51; 82;) zusammenhängt, um die Salzkonzentration auf der Straßenoberfläche zu bestimmen.

10. Verfahren nach Anspruch 9, das ferner die Anzeige von Salzkonzentrationsdaten umfasst, die mit den durchgeführten Messungen der Veränderung der elektrischen Eigenschaft in Zusammenhang stehen.

11. Verfahren nach Anspruch 9 oder 10, wobei die elektrische Eigenschaft ausgewählt wird aus elektrischer Leitfähigkeit, elektrischem Widerstand, elektrischer Kapazität, Spannung und Dielektrizitätskonstante.

## Revendications

1. Dispositif (1 ; 50 ; 80) pour déterminer la concentration en sel sur la surface d'une route (120), le dispositif comprenant :
- une plaque (2) ayant une première partie (2a) adaptée pour être fixée sur une partie extérieure d'un véhicule de service (100) et une deuxième partie (2b) pivotant par rapport à la première partie (2a),
- au moins deux électrodes (4 ; 51 ; 82) fixées sur ladite deuxième partie (2b) de la plaque (2) et faisant saillie depuis celle-ci,
- un moyen motorisé (5, 55) pour faire tourner ladite deuxième partie (2b) de la plaque (2) entre une position de repos, dans laquelle elle est sensiblement sur le même plan que ladite première partie (2a) de la plaque (2) de sorte que, en utilisation, elle est relevée par rapport à la surface de la route (120) croisée par ledit véhicule de service (100), et une position fonctionnelle, dans laquelle ladite deuxième partie (2b) de la plaque (2), en utilisation, est abaissée afin de permettre auxdites électrodes (4 ; 51 ; 82) d'être en contact avec ladite surface de la route (120) pendant la progression dudit véhicule de service (100), et
- un circuit électrique (20) comprenant lesdites électrodes (4 ; 51 ; 82) et une unité de commande d'exploitation (25) (CPU) agencée pour commander l'application d'un courant ou d'une tension entre lesdites électrodes (4 ; 51 ; 82) quand ces dernières sont dans la position fonctionnelle susmentionnée et pour recevoir et élaborer des données concernant la variation d'une propriété électrique mesurée dans ledit circuit et corrélées à la concentration en sel entre lesdites électrodes (4 ; 51 ; 82) afin de déterminer la concentration en sel sur ladite surface de la route.

2. Dispositif (1 ; 50 ; 80) selon la revendication 1, comprenant en outre une unité d'affichage (33) reliée à ladite unité de commande d'exploitation (25) pour afficher les valeurs de concentration en sel reçues et éventuellement traitées par ladite unité de commande d'exploitation (25).

3. Dispositif (1 ; 50 ; 80) selon la revendication 1 ou 2, dans lequel ledit moyen motorisé comprend un moteur (5) articulé sur ladite première partie (2a) de la plaque (2) et ayant une tige coulissante (8) articulée sur une extrémité libre à un élément de forme plate (9) fixé sur ladite deuxième partie (2b) de la plaque (2) et faisant saillie depuis celle-ci, ledit moteur (5) étant relié électriquement à ladite unité de commande (25) et pouvant être commandé par cette dernière pour mouvoir ladite deuxième partie (2b) de la plaque (2) entre ladite position de repos et ladite position fonctionnelle.

4. Dispositif (1) selon l'une quelconque des précédentes revendications 1 à 3, dans lequel lesdites électrodes (4) sont de préférence constituées de graphène et ont chacune une première partie (4a) fixée à ladite deuxième partie (2b) de la plaque (2) et une deuxième partie (4b) faisant saillie depuis ladite deuxième partie (2b) de la plaque (2), la deuxième partie (4b) de chaque électrode (4) étant reliée de manière élastique à la première partie respective (4a) et étant coulissante sur cette dernière.

5. Dispositif (50) selon l'une quelconque des précédentes revendications 1 à 3, comprenant en outre des premières sections tubulaires (52) fixées à ladite première partie (2a) de la plaque (2) et des deuxièmes sections tubulaires (53) fixées à ladite deuxième partie (2b) de la plaque (2), lesdites électrodes se présentant sous la forme de câbles (51) passant dans lesdites sections tubulaires et ayant une partie (51a) faisant saillie depuis ladite deuxième partie (2b) de la plaque (2), et une pluralité de roues d'engrenage (54) interagissant avec lesdits câbles (51) dans lesdites premières sections tubulaires (52) et commandées par ledit moyen motorisé (55) en communication avec ladite unité de commande d'exploitation (25) pour permettre le glissement par traction desdits câbles (51) vers lesdites deuxièmes sections tubulaires (53).

6. Dispositif (50) selon la revendication 5, comprenant en outre des capteurs (57) fixés sur ladite deuxième partie (2b) de la plaque (2) pour détecter la présence, l'absence et/ou la réduction sous une longueur minimum prédéterminée de ladite partie saillante (51a) des câbles (51), lesdits capteurs (57) étant en communication avec ladite unité de commande d'exploitation (25) pour permettre l'actionnement du moyen motorisé (55) et des roues d'engrenage respectives (54) lorsque ladite partie saillante (51a) des câbles (51) est absente ou a une longueur qui est inférieure à la longueur minimum prédéterminée et pour arrêter ledit moyen motorisé (55) et lesdites roues d'engrenage respectives (54) lorsque ladite partie saillante (51a) des câbles (51) atteint au moins la longueur minimum prédéterminée.

7. Dispositif (80) selon l'une quelconque des précédentes revendications 1 à 3, dans lequel lesdites électrodes (4) se présentent sous la forme de roues (82) qui sont reliées à rotation à ladite deuxième partie (2b) de la plaque (2) et faisant saillie depuis celle-ci, lesdites roues étant de préférence constituées de graphène ou sous la forme de balais pourvus de poils en matériau conducteur, notamment en acier inoxydable, entre lesquels du caoutchouc vulcanisé est inséré.

8. Véhicule de service (100) comprenant un dispositif (1 ; 50 ; 80) selon l'une quelconque des précédentes revendications 1 à 7.

9. Procédé de détermination de la concentration en sel sur la surface d'une route (120) lorsqu'elle est croisée par un véhicule (100) comprenant un dispositif selon l'une quelconque des précédentes revendications 1 à 7, le procédé comprenant les étapes suivantes :
- disposer les électrodes (4 ; 51 ; 82) dans la position fonctionnelle en contact avec ladite surface de la route (120) ;
- appliquer une tension et/ou un courant électrique entre lesdites électrodes (4 ; 51 ; 82),
- mesurer une variation d'une propriété électrique dans le circuit électrique (20) dudit dispositif (1) concernant la concentration en sel entre lesdites électrodes (4 ; 51 ; 82), et
- traiter les données liées à la variation d'une propriété électrique mesurée dans ledit circuit et liées à la concentration en sel entre lesdites électrodes (4 ; 51 ; 82) afin de déterminer la concentration en sel sur ladite surface de la route.

10. Procédé selon la revendication 9, comprenant en outre le fait d'afficher des données de concentration en sel liées aux mesures réalisées de ladite variation de la propriété électrique.

11. Procédé selon la revendication 9 ou 10, dans lequel ladite propriété électrique est choisie parmi la conductivité électrique, la résistance électrique, la capacité électrique, la tension et la constante diélectrique.
